# EUROPEAN PATENT APPLICATION

(11) **EP 4 847 981 A1**
(43) Date of publication of application: **02.12.2026**
(21) Application number: 25225747.2
(22) Date of filing: 19.12.2025
(51) Int. Cl.: G02B 6/44

(54) **OPTICAL FIBER CABLE WITH HIGH FIBER COUNT**

(30) Priority: 27.05.2025 IN 202511050819
(71) Applicant: Sterlite Technologies Limited, Gurugram, Haryana 122102 (IN)
(72) Inventor: Sahoo, Kishore, 122102 Gurugram (IN); Rajsekar, Vishnu, 122102 Gurugram (IN); Bagri, Hemant, 122102 Gurugram (IN)
(74) Representative: Valet Patent Services Limited

(57) **Abstract**

The present disclosure relates to an optical fiber cable (100) comprising a core with a plurality of non-stranded optical fiber units (102), one or more stranded optical fiber units (104), a thermoplastic layer (106) surrounding the stranded optical fiber units (104), a binder yarn (108), a water blocking tape (110) and a strength member (112). In particular, the twisted bendable ribbon bundles (122) provide friction to prevent the one or more stranded optical fiber unit (104) from shifting and ensuring stable optical performance. Further, arranged concentrically around the inner bundles, the stranded bundles (104) are secured with a binder to maintain their lay, improving packing density, reducing micro-bending losses, and enhancing both the mechanical and optical performance of the optical fiber cable (100).

## Description

### TECHNICAL FIELD

Embodiments of the present disclosure relate to the field of telecommunication fiber, and more particularly, relates to an optical fiber cable with high fiber count.

This application claims the benefit of Indian Application No. "IN202511050819" titled "OPTICAL FIBER CABLE WITH HIGH FIBER COUNT" filed by the applicant on May 27, 2025, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

Current optical fiber cable designs face several significant challenges, particularly as the demand for high fiber count cables continues to rise to meet the needs of growing data and broadband usage. One of the main issues is packing density. Conventional high-fiber count cables often use multitube constructions, where fibers are stranded around a central member. While this approach provides a way to bundle multiple fibers, it consumes substantial space within the cable core. The presence of the central member and multiple tubes limits the overall packing density, preventing the cable from accommodating a higher number of fibers in a more compact form.

Another problem arises in designs that utilize concentric layers of stranded fiber bundles. In these configurations, the inner layers typically exhibit different stiffness and flexibility than the outer layers, which can lead to the outer layer losing its lay and causing performance degradation. The loss of lay in the outer layers can lead to misalignment and distortion of the fiber arrangement, impacting signal transmission and overall optical performance. Moreover, to prevent this issue, high-tension binders are often used to retain the lay length. However, these binders can create additional problems, such as inducing micro-bending attenuation, which further degrades the optical performance of the cable.

In existing optical fiber cables, especially those disclosed in the prior art, which often fail to meet the increasing demands for higher density, better optical performance, and durability in modern communication systems. T

Prior art reference US2024201461A1, typically uses a single embedded fiber unit at the center with tubes surrounding it. This configuration limits the overall fiber count and density, leading to cables that are bulkier and less optimized for high-capacity applications. The reliance on a tubular design also results in inefficient packing, taking up more space within the cable, which could otherwise be utilized for more fibers. As networks require ever-increasing bandwidth, this traditional approach falls short of providing a compact, high-performance solution

Furthermore, the manufacturing process for cables disclosed in the prior art can be complex and costly. For instance, prior art reference US20220365301A1 discloses the use of stranded bundles in the inner layers, which results in less dense packaging and higher production costs. Additionally, the use of extruded films to enclose ribbons adds complexity and expense to the manufacturing process. In contrast, the disclosure proposes the use of binder yarns around the outermost layer of stranded optical fiber units. This alternative is easier to process, more cost-effective, and simpler to strip, significantly reducing manufacturing time and costs while maintaining the necessary cable performance.

Another notable disadvantage of existing designs is their bending performance and flexibility.

Another prior art reference US20220365301A1, uses diagonal embedding techniques, which do not provide the same level of flexibility and bending performance as the distributed embedding approach proposed in the disclosure. Distributed embedding offers better bending performance, allowing the cable to maintain its integrity and performance when subjected to frequent movement or installation in confined spaces. Without these improvements, traditional cables are more prone to damage during handling and installation.

Lastly, prior art optical fiber cables often do not address the blowing performance, a key consideration in modern cable installation techniques. Cables in prior art reference US20220365301A1 lack features such as ribs or grooves on the sheath, which are critical for enhancing the blowing performance during installation. Without these features, the cable may experience difficulty being blown through ducts, resulting in a slower, more costly installation process.

Accordingly, to overcome the disadvantages of the prior art, there is an urgent need for a technical solution that overcomes the above-stated limitations in the prior arts by an innovative optical fiber cable that can overcome the above disadvantages. The present disclosure overcomes this limitation by incorporating these features, making the cable easier and more cost-efficient to install, especially in complex network environments.

Thus, the present disclosure proposes a high fiber count optical fiber cable with high packaging density and improved optical performance.

### SUMMARY OF THE DISCLOSURE

The present disclosure addresses the technical problem of providing an optical fiber cable that achieves a fiber packing density exceeding 60% while simultaneously maintaining low optical attenuation, mechanical stability during installation, and superior air-blowing performance. Conventional approaches fail to achieve this combination because either: fully stranded designs induce excessive micro-bending from high tension binders, limiting packing density; or non-stranded central members consume valuable cross-sectional area. The technical solution involves a combination of specifically configured non-stranded and stranded optical fiber units with contrasting lay length and extra length parameters that stabilize each other mechanically while optimizing space utilization.

According to one aspect of the present disclosure, the optical fiber cable provides a plurality of non-stranded optical fiber units (102) having a lay length greater than 20,000 mm with an extra unit length of 0 to 0.5%, combined with the one or more stranded optical fiber units (104) having a lay length of 500-1500 mm with an extra unit length of 0.5% to 1.5%. This asymmetrical configuration may create a mechanically stable core that may provide frictional engagement with the stranded outer layer, preventing lay collapse without requiring a conventional central strength member. The parameter ranges results in a fiber packing density greater than 60% while maintaining optical performance, with attenuation changes below 0.05 dB under bending conditions.

Embodiments of the present disclosure relates to an optical fiber cable comprising a plurality of non-stranded optical fiber units and one or more stranded optical fiber units wound around the non-stranded optical fiber units and a thermoplastic layer surrounding all the above elements.

According to the first aspect of the present disclosure, the plurality of non-stranded optical fiber units has a lay length > 20,000 mm and extra unit length of 0 to 0.5% relative to cable length. In particular, the one or more stranded optical fiber units has a lay length of 500-1500 mm and extra unit length of 0.5% to 1.5%. Further, the non-stranded optical fiber units comprise a plurality of twisted bendable optical fiber ribbons with a lay length between 4000-10,000 mm.

According to the second aspect of the present disclosure, the non-stranded optical fiber units are defined by a lay length> 20000mm and extra unit length 0 to 0.5 % with respect to the cable length.

According to the third aspect of the present disclosure, the optical fiber cable further comprises a binder, film, yarn or tape over at least one of the plurality of non-stranded optical fiber units and the one or more stranded optical fiber units.

According to the fourth aspect of the present disclosure, the optical fiber cable further comprises one or more binder yarns having a lay length of 25-100 mm when applied over stranded optical fiber units.

According to the fifth aspect of the present disclosure, the one or more optical fibers comprises a base glass fiber, a primary coating and a secondary coating, where mean primary coating tensile modulus at room temp 0.4 - 1 MPa, mean secondary coating tensile modulus at room temp 30 - 50 MPa and primary coating Refractive Index (RI) 1.44 to 1.49.

According to the sixth aspect of the present disclosure, the optical fiber cable configured to be air-blown for a distance 1500-2000m at an average speed > 50m/min with air pressure 10±5bar and a Duct Fill Ratio (DFR) 35-65%, route having at least one turn of bend radius between 400-500mm.

According to the seventh aspect of the present disclosure, the cable packing density is > 60%.

The foregoing objectives of the present disclosure are attained by providing an optical fiber cable with bundles of optical fibers.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an optical fiber cable (100) in accordance with an embodiment of the disclosure;
Fig. 2 is a pictorial snapshot illustrating an optical fiber cable (100) with additional elements of water blocking tape (110) and binder yarn (108) in accordance with an embodiment of the disclosure;
Fig. 3 is a pictorial snapshot illustrating optical fiber cable (100)with ribbed thermoplastic layer (106)in accordance with an embodiment of the disclosure;
Fig. 4 is a pictorial snapshot illustrating an optical fiber cable (100)with compact fiber unit (CFU) (114) in accordance with an embodiment of the disclosure;
Fig. 5 is a pictorial snapshot illustrating optical fiber cable (100)with outer layer (104₁) of stranded optical fiber units (104)in accordance with an embodiment of the disclosure;
Fig. 6 is a pictorial snapshot illustrating an optical fiber cable (100) with one or more layers of binder yarn (108) in accordance with an embodiment of the disclosure;
Fig. 7 is a pictorial snapshot illustrating an isometric view of a stranded or non-stranded optical fiber unit in accordance with an embodiment of the disclosure;
Fig. 8 is a pictorial snapshot illustrating a cross- sectional view of the optical fiber cable (100) with twisted bendable ribbon (120) and binder yarn (108)in accordance with an embodiment of the disclosure;
Fig. 9 is a pictorial snapshot illustrating a compact fiber unit (CFU) (114)in accordance with an embodiment of the disclosure; and
Fig. 10 is a pictorial snapshot illustrating an optical fiber (118) in accordance with an embodiment of the disclosure.

The optical fibre cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

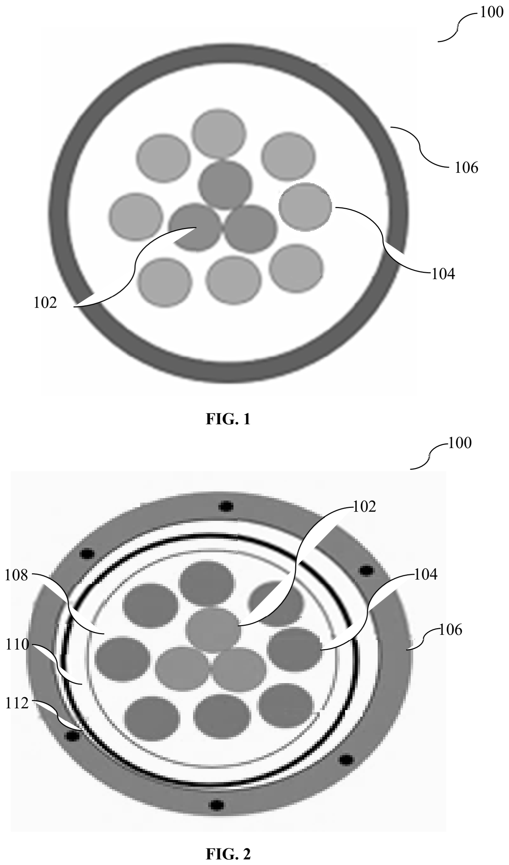

Fig. 1 is a pictorial snapshot illustrating an optical fiber cable (100). In particular, the optical fiber cable (100) comprises a plurality of non-stranded optical fiber units (102), one or more stranded optical fiber units (104) and a thermoplastic layer (106). Moreover, each non-stranded optical fiber unit (102) from the plurality of non-stranded optical fiber units (102) comprises a plurality of twisted bendable optical fiber ribbons (124). Further, the one or more stranded optical fiber units (104) are wound around the plurality of non-stranded optical fiber units (102). The one or more stranded optical fiber units (104) are wound around the plurality of non-stranded optical fiber units (102) in helical or SZ fashion.

In accordance with an embodiment of the present disclosure, the plurality of non-stranded optical fiber units (102) act like a central strength member, which offers friction to keep the stranded optical fiber units (104) from untwisting or shifting during manufacturing and handling. Further, the friction generated by the plurality of non-stranded optical fiber units (102) stabilizes the one or more stranded optical fiber unit (104) and ensures that the one or more stranded optical fiber units (104) maintain their intended lay length.

In accordance with an embodiment of the present disclosure, lay length is the distance required to complete one revolution of the strand around the stranding diameter, which is important for controlling the arrangement of the individual fibers within the optical fiber cable (100) by minimizing the risk of optical performance degradation due to misalignment. Further, the thermoplastic layer (106) offers additional protection against environmental factors. This ensures the optical fiber cable (100) is both flexible for installation and durable for long-term use.

In accordance with one or more embodiments of the present disclosure, the optical fiber cable may achieve its advantageous properties through a combination of structural parameters - the plurality of non-stranded optical fiber units (102) having a lay length greater than 20,000 mm with an extra unit length of 0 to 0.5%, the one or more stranded optical fiber units (104) having a lay length of 500-1500 mm and an extra unit length of 0.5% to 1.5%. This asymmetrical configuration creates a mechanically stable core that provides frictional engagement with the stranded outer layer, preventing lay collapse without requiring a conventional central strength member. It results in a fiber packing density greater than 60% while maintaining optical performance, with attenuation changes below 0.05 dB under bending conditions.

In accordance with an embodiment of the present disclosure, the one or more stranded optical fiber units (104) are arranged concentrically around the plurality of non-stranded optical fiber units (102), creating a structure which is both mechanically stable and optically efficient. In particular, the strands may be held together using a binder, further stabilizing the overall configuration. This improves the packing density of the cable, allowing for more fibers to be accommodated within the same cable diameter. Moreover, the packing density is defined as the ratio of the sum of cross-sectional areas of all the optical fibers in the cable core to the cross-sectional area inside the inner surface of the thermoplastic layer (106). In embodiments according to the present disclosure, this packing density exceeds 60%, which represents a significant improvement over conventional high-fiber count cables that typically achieve 40-55% packing density. This improvement is directly enabled by the specific combination of non-stranded and stranded optical fiber unit parameters described herein, which eliminates the need for a central strength member and optimizes space utilization. Further, the structure reduces micro-bending losses, which occur when the fibers are subjected to small, localized bends that can impair signal transmission. By reducing micro-bending and maintaining a stable fiber arrangement, the cable delivers enhanced optical performance, ensuring that the signals travel with minimal loss and distortion.

Fig. 2 is a pictorial snapshot illustrating an optical fiber cable (100) comprising plurality of non-stranded optical fiber unit (102), the one or more stranded optical fiber unit (104), a binder yarn (108), a water blocking tape (WBT) (110), a plurality of strength member (112), the thermoplastic layer (106). Particularly, the one or more stranded optical fiber units (104) are wound around the plurality of non-stranded optical fiber units (102). Moreover, the one or more stranded optical fiber unit (104) and one or more non-stranded optical fiber unit (102)are bound by one or more binder yarns (108). Further, the WBT is wrapped around the plurality of stranded optical fiber units (104).

In accordance with an embodiment of the present disclosure, an additional WBT may be wrapped around a plurality non-stranded optical fiber unit (102). In particular, the binder yarn (108) secures the non-stranded optical fiber units and the stranded optical fiber units, while water-blocking tape (110) prevents moisture from entering and damaging the non-stranded optical fiber units and the stranded optical fiber units. The thermoplastic layer (106) surrounds all the above elements. Moreover, a plurality of strength members (112) is embedded in the thermoplastic layer (106). Further, the strength members (112) are evenly spaced around the radius of the thermoplastic layer (106). The strength members (112) enhance the cable's mechanical stability, making it resistant to external tension and stress during installation and use.

In accordance with an embodiment of the present disclosure, the thermoplastic layer (106) is embedded with strength members (112) e.g. Fiber Reinforced Plastic (FRP) and Aramid Reinforced Plastic (ARP). In particular, the strength members (112) are radially distributed or paired in diagonally opposite positions. The outer surface of the thermoplastic layer (106)may be corrugated i.e. has a plurality of alternating ribs and grooves.

In another embodiment, the outer surface may be smooth and the inner surface may have ribs and grooves. Also, the inner or outer surface may have ribs and grooves and the thermoplastic layer (106) has no embedding. The one or more strength member (112) may be present beneath the thermoplastic layer (106).

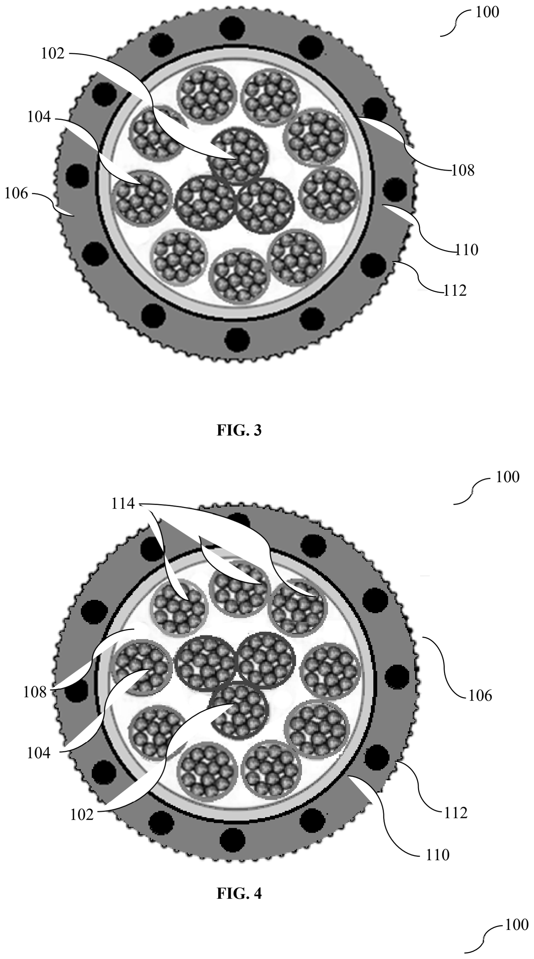

Fig. 3 is a pictorial snapshot illustrating an optical fiber cable (100) comprises plurality of non-stranded optical fiber units (102), the stranded optical fiber unit (104), the thermoplastic layer (106), the binder yarn (108), the water blocking tape (110) and the plurality of strength member (112). In particular, the thermoplastic layer (106) as explained in Figure 2, may be a ribbed thermoplastic layer. Moreover, the ribbed thermoplastic layer (106) distributes mechanical stress evenly across the optical fiber cable (100), preventing damage from external forces. It also provides extra resistance to abrasion, impact, and pressure, making the cable more durable in harsh environments. Further, the ribbed thermoplastic layer (106)can also facilitate easier handling and installation by improving grip and reducing friction. This added protection ensures the cable's longevity and reliability in a wide range of applications.

Fig. 4 is a pictorial snapshot illustrating an optical fiber cable (100) comprises the non-stranded optical fiber unit (102), the stranded optical fiber unit (104), the ribbed thermoplastic layer (106), binder yarn (108), water blocking tape (110), strength member (112)and one or more compact fiber unit (CFU) (114).The one or more stranded optical fiber unit (104) may be compact fiber unit (114). In particular, the compact fiber unit (CFU) (114) comprises one or more optical fibers (118) embedded in a resin (116). The one or more optical fibers (118) may be loose fibers or rollable ribbons. Further, the compact fiber unit (CFU) (114), integrates the one or more optical fibers (118) in the resin (116), providing added structural support and protection.

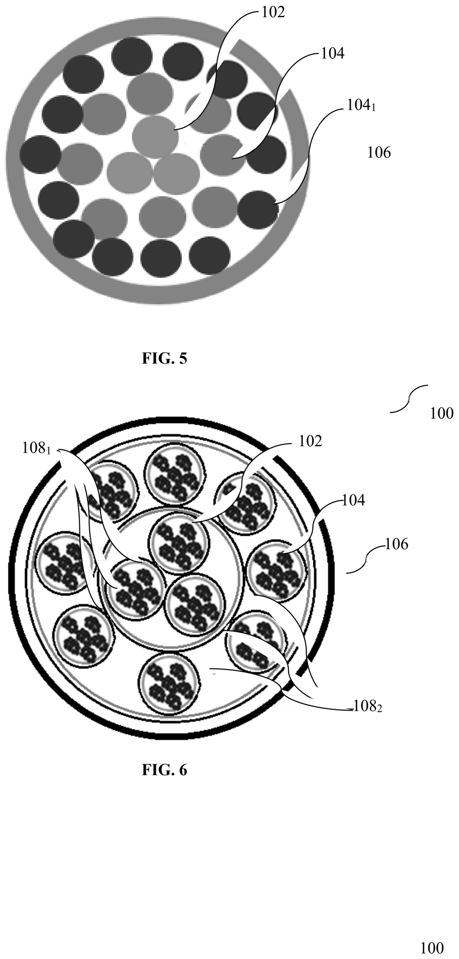

Fig. 5 is a pictorial snapshot illustrating an optical fiber cable (100) comprising the plurality of non-stranded optical fiber units (102) where one or more stranded optical fiber units (104) are wound around the non-stranded optical fiber units (102) as illustrated in Figure 1. Additionally, the one or more stranded optical fiber units(104) surrounds the one or more stranded optical fiber units (104)making one or more concentric layers (104₁) of optical units. Further, the thermoplastic layer (106) is the outermost layer that encloses the outer layer (104₁).

In accordance with an embodiment of the present disclosure, the outer layer(104₁) of stranded optical fibers (104) adds an extra level of mechanical protection to the plurality of non-stranded optical fiber units (102), minimizing the risk of damage from bending, tension, or external impacts. Additionally, the thermoplastic layer (106) shields the cable from environmental factors such as moisture, UV radiation, and abrasion, ensuring long-term durability and reliable performance.

Fig. 6 is a pictorial snapshot illustrating an optical fiber cable (100) comprising the plurality of non-stranded optical fiber unit (102) and one or more stranded optical fiber unit (104). In particular, each non-stranded optical fiber unit (102) from the plurality of the non-stranded optical fiber unit (102) and stranded optical fiber unit (104) from the plurality of the stranded optical fiber unit (104), comprises a plurality of twisted bendable optical fiber ribbon (124). Further, the twisted bendable optical fiber ribbon (124) may be Intermittently bonded ribbons (IBR).

In an exemplary embodiment of the disclosure, 3 non-stranded optical fiber units (102) are surrounded by the plurality of the stranded optical fiber unit (104). The twisted bendable optical fiber ribbons (124) in each non-stranded optical fiber unit (102) and stranded optical fiber unit (104)are bound by one or more binder elements (108).

Further, the plurality of the non-stranded optical fiber units (102)is bound by one or more binder elements (108). Similarly, the one or more concentric layers of stranded optical fiber units (104) is encircled by one or more binder elements (108). The plurality of the stranded optical fiber unit (104) surrounded by the thermoplastic layer (106).In an embodiment, two binders are applied contra-helically for the binding application.

In accordance with an embodiment of the present disclosure, one or more stranded optical fiber units may be twisted or wound in a helical or SZ-stranded configuration. In SZ-stranded configuration, the stranding direction alternates between S and Z twists along the length of the cable. The one or more binder element (108) is applied over one or more stranded units or twisted bundles to keep the position intact. Similarly, one or more binder yarn encloses the plurality of non-stranded optical fiber units (102). The lay length of the binder yarn (108) is25-100 mm, which may be applied over one or more stranded optical units (104) and one or more non-stranded optical units (102).

In accordance with an embodiment of the present disclosure, two binder yarns (108) may be applied contra-helically over each of the stranded optical units (104) and non-stranded optical units (102) to bind the plurality of bendable ribbons. Alternatively, the binder element (108) may consist of a polymer film wrapped around the plurality of twisted bendable optical fiber ribbons (124).

The superior performance of the high-density optical fiber cable (100) is achieved by maintaining the lay length of the optical fiber units in the outer layers i.e., stranded optical fiber units.

In accordance with an embodiment of the present disclosure, the one or more stranded optical fiber units have a lay length to sheath internal diameter (ID) ratio between 25-100. A lay length between 25-100 mm is optimal for compensating for the stress experienced by the optical fibers. If the lay length is below 25 mm, compressive stress on fibers will be high, manufacturing speed will get reduced and yarn consumption will be more. This results in higher stress on the fibers due to a lack of free space, which creates pressure points and can slow down manufacturing speed.

On the other hand, if the lay length exceeds 100 mm, the bundle intactness will get impacted, leading to ribbon bulges in the bundles and poor packaging. Fibers at the bottom of the core will experience compressive strain, while those at the top will experience tensile strain, which can cause issues with the cable's performance. To maintain performance during bending, the change in attenuation must be kept below 0.05 dB. Any increase beyond this threshold may complicate the cable's installation process, especially when bending around corners or tight spaces.

In terms of the cable's internal structure, a filling coefficient greater than 60% relative to the internal diameter (ID) of the cable thermoplastic layer (106) ensures that the cable remains compact and efficient. If the filling coefficient is lower, the cable diameter and weight increase, which is undesirable for both performance (such as blowing efficiency) and sustainability, as it leads to higher carbon footprints and material usage.

In accordance with an embodiment of the present disclosure, IBR lay length in each optical unit, ideally between 4000-10000 mm, is necessary to maintain optimal stress management during handling and installation. If the lay is shorter than 4000 mm, bulges can form in the optical units, leading to abrasion of the fibers against other cable elements and reduced manufacturing speed. If the lay length exceeds 10,000 mm, extra ribbon length becomes insufficient to manage stress without increasing attenuation in non-stranded optical fiber units (102).

For a plurality of non-stranded optical fiber units (102) with a lay length greater than 20,000 mm, the non-stranded optical fiber units (102) are designed to remain substantially straight within the cable. This straightness helps to support the twisted or stranded bundles in the outer layers, ensuring they maintain their proper lay. If the lay length is too short, the non-stranded optical fiber units will not be able to provide sufficient friction and support, leading to instability in the overall cable structure.

The very long lay length (>20,000 mm) of the non-stranded units (102) provides a substantially straight, stable central core that acts as a frictional anchor. This allows the shorter lay length stranded units (104) (500-1500 mm) to maintain their helical configuration without requiring high-tension binders that would induce micro-bending. The different extra length ranges (0-0.5% for non-stranded vs. 0.5-1.5% for stranded) may accommodate differential strain during cable bending and temperature variations without transferring stress to the optical fibers. This combination may enable the elimination of a traditional central strength member, freeing cross-sectional area that directly contributes to achieving packing densities exceeding 60%.

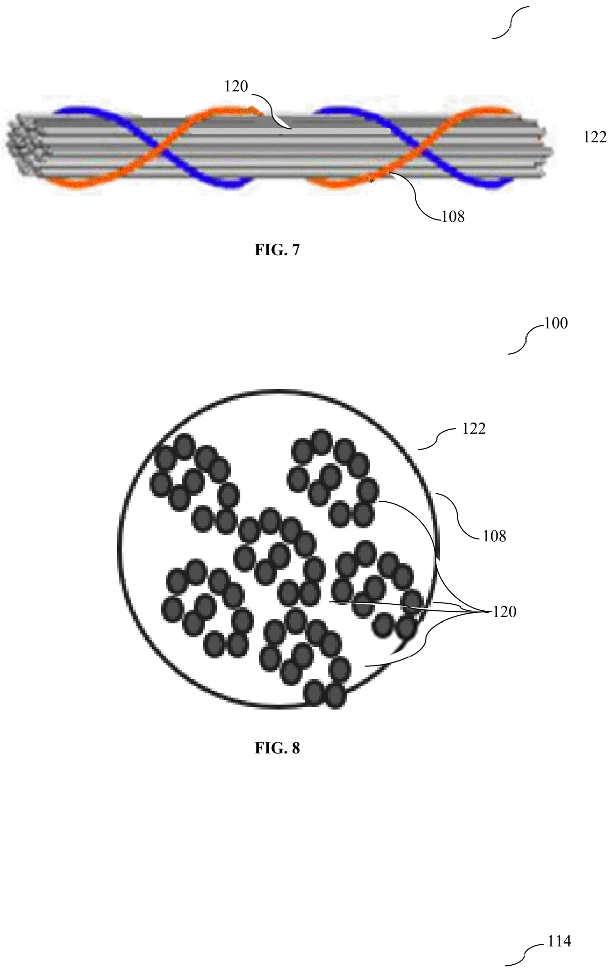

Fig. 7 is a pictorial snapshot illustrating isometric view of a stranded or non-stranded optical fiber unit. In particular, the plurality of non-stranded optical fiber units (102) and stranded optical fiber units (104) comprises a plurality of twisted bendable optical fiber ribbons (120).

Fig.8 is a pictorial snapshot illustrating the cross-section view of the optical fiber unit (102, 104), where the plurality of twisted bendable optical fiber ribbons (120) is helically twisted to form a bendable ribbon bundle (122). Further, the one or more binder yarn (108) binds the bendable ribbons bundle (122) to keep the plurality of twisted bendable optical fiber ribbons (120) in place and form non-stranded optical fiber units (102) and stranded optical fiber units (104).

In accordance with an embodiment of the present disclosure, the optical fiber cable (100) ensures minimal optical attenuation, with a change in attenuation of less than 0.05 dB when bent at a radius of 150 mm ± 10 mm with three turns. This is critical as the optical fiber cable (100) must be coiled during installation. To achieve this, the arrangement of plurality of twisted bendable optical fiber ribbons (120) in the optical elements and their configuration within the cable is carefully optimized to minimize attenuation under bending stress. Further, optical fiber cable (100) includes multiple layers for added protection and structural integrity.

In accordance with an embodiment of the present disclosure, these layers may consist of Water Block Tape(WBT), Water-Swelling Yarn(WSY), tensile yarns, mica tape, dielectric armor such as Fiber Reinforced Plastic (FRP), Aramid Reinforced Plastic (ARP), and metal armor such as Electrolytic Chromium Coated Steel(ECCS), providing resistance to environmental factors, mechanical stresses, and water ingress.

In accordance with an embodiment of the present disclosure, the lay length of the stranded layers, ranging from 500 to 1500 mm, is optimized to balance low optical attenuation with dense cable packaging, ensuring both flexibility during installation and maintaining the cable's performance.

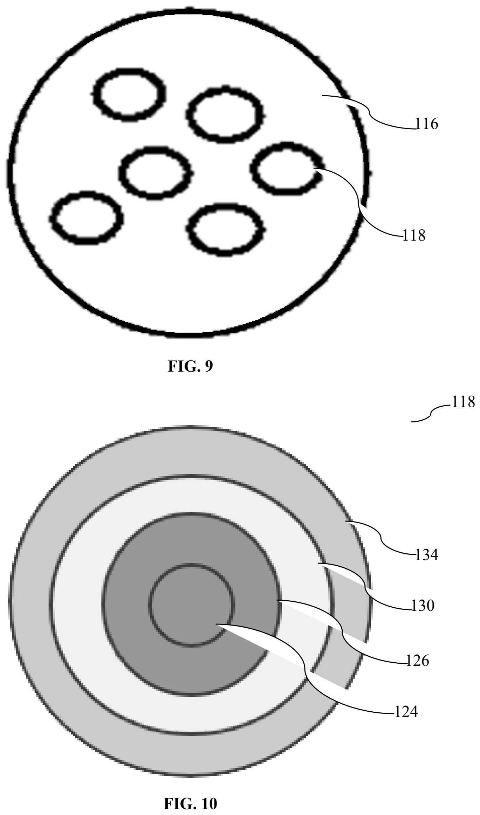

Fig. 9 is a pictorial snapshot illustrating a cross-sectional view of the compact fiber unit (CFU) (114) that comprises one or more optical fibers (118) embedded in resin (116). In one embodiment of the disclosure the optical fibers (118) may be loose fibers or rollable ribbons. In particular, the optical fibers (118)are arranged and securely encapsulated within the resin, forming an integrated unit, which provides mechanical protection to the optical fibers (118) while maintaining the flexibility and structural integrity. Further, the resin (116) helps to stabilize the fibers, preventing them from shifting or being damaged.

Fig. 10 is a pictorial snapshot illustrating a cross-sectional view of the optical fiber (118). In particular, the optical fiber comprises a glass core (124), a glass cladding (126), a primary coating (130) and a secondary coating (132). The core (124) of the fiber is made of glass (118), which carries the light signals through total internal reflection. Surrounding the core (124) is the glass cladding (126), which has a lower refractive index than the core, ensuring the light remains contained within the core.

In accordance with an embodiment of the present disclosure, the optical fiber is further protected by a primary coating (130), which provides mechanical strength and helps prevent physical damage to the core. In particular, mean primary coating tensile at room temperature is 0.4 to 1 MPa, where primary coating Refractive Index (RI) is 1.44 to 1.49, and Young's modulus of primary coating is in between 0.3 to 0.5 MPa. Similarly, a secondary coating (132) is applied on the primary coating (130) to enhance durability, offering additional protection against environmental factors like moisture and physical abrasion. Further, the mean secondary coating tensile at room temp is between 30 to 50 MPa, the Refractive Index (RI) of the secondary coating (132) is 1.52 to 1.54 and the Young's modulus of the secondary coating (132) is between 800 to 1200 MPa.In one or more embodiments of the disclosure, the optical fiber (118) may have a color layer over the secondary coating (132).

In accordance with an embodiment of the present disclosure, the secondary coating (132) may be a colored layer. Together, these layers allow the optical fiber (118) to transmit light signals efficiently while ensuring its longevity and resilience in various applications.

Cable installation using high-speed airflow combined with mechanical pushing force is known as "blowing" or "jetting." This method involves the installation of optical fiber cables into a pre-installed duct by injecting compressed air at the duct inlet after a few hundred meters of the cable have been pushed into the duct. The compressed air flows at high speeds along the cable, helping it move through the duct. A pushing device is used to apply force near the cable inlet, assisting in the cable's progression through the duct. This technique is suitable for installing various types of cables, including standard optical fiber cables (such as uni-tube, multi-tube, unarmored, and armored cables), as well as micro-duct cables and highdensity ribbon cables. The blowing method allows for the installation of micro-duct cables in continuous lengths of over 1000 meters, depending on the duct route and conditions.

In accordance with an embodiment of the present disclosure, the ability to blow a cable through a duct is influenced by three key parameters: Duct Fill Ratio, Coefficient of Friction, and Cable Stiffness. The Duct Fill Ratio, which refers to the ratio of the cable size to the duct size, affects how much space is available for cable movement. In general, the duct fill ratio is the ratio of cross-sectional area of cable with respect to outermost surface/cross-sectional area of duct with respect to innermost surface. The Coefficient of Friction, determined by the interaction between the cable's outer surface and the duct's inner wall, also plays a significant role. A higher coefficient means more resistance, limiting how far the cable can be blown. Finally, Cable Stiffness, related to the cable's flexibility, impacts the ease with which the cable can navigate bends in the duct.

In accordance with an embodiment of the present disclosure, the angular position of one or more fibers (118) in a non-stranded optical fiber unit (102) varies within 0- ±90° with respect to substantial central axis of the optical fiber cable (100) within a length of 10m in the cable at any cross-section of the cable.

In accordance with another embodiment of the present disclosure, the angular position of one or more fibers (118) in a non-stranded optical fiber unit(102) varies within 0- ±180° with respect to substantial central axis of the unit within a length of 10m in the optical fiber cable (100) at any cross-section of the cable.

In accordance with yet another embodiment of the present disclosure, the angular position of one or more fibers (118) in a stranded optical fiber unit (104) varies within 0- ±180° with respect to substantial central axis of the optical fiber cable (100) within a length of 10m in the cable at any cross-section of the cable.

In accordance with yet another embodiment of the present disclosure, the angular position of one or more fibers (118) in a stranded optical fiber unit (104) varies within 0- ±180° with respect to substantial central axis of the unit within a length of 10m in the optical fiber cable (100) at any cross-section of the cable.

In one or more embodiments of the present disclosure, an optical fiber cable (100) has a plurality of twisted bendable optical fiber ribbons (120) within each optical fiber unit, with a lay length ranging from 4000 to 10,000 mm. The lay length may contribute to distributing mechanical stress evenly along the twisted bendable optical fiber ribbons (120), thereby mitigating ribbon bulging and maintaining optical attenuation change within 0.05 dB even under bending conditions. Further, an optical fiber cable (100)has both non-stranded (102) and stranded optical fiber units (104), around which a binder yarn (108) is helically wound with a lay length between 25-100 mm, contributing to ensure that the twisted bendable bundle (122) remains mechanically intact while keeping micro-bending losses within ≤0.5 dB/turn at 1550 nm at a 7.5 mm bend radius. The lay length contributes to balance tensile and compressive stresses.

In one or more embodiments of the present disclosure, at least one optical fiber unit in the cable is constructed as a resin-embedded Compact Fiber Unit (CFU) (114), where multiple fibers (118) are encapsulated within a flexible but mechanically robust resin matrix.. In particular, the cable is enclosed in a thermoplastic layer (106) that has alternating ribs and grooves on its surface, which may contribute to more reliable deployments in constrained conduit environments. Moreover, the cable's thermoplastic layer (106) has radially distributed strength members (112)such as aramid or fiber-reinforced plastic rods that may be partially embedded in the sheath material, contributing to provide uniform tensile reinforcement around the cable's circumference and a mechanically balanced cable. Further, each optical fiber (118) in the cable is coated with a primary coating (130) having a tensile modulus of 0.4-1 MPa and a refractive index between 1.44 and 1.49, followed by a secondary coating (132) with a tensile modulus of 30-50 MPa. This dual-layer coating is designed to minimize micro-bending-induced optical losses to ≤0.5 dB/turn at 1550 nm.

In accordance with an embodiment of the present disclosure, the optical fiber cable may use 3+9 multi-layered stranded configuration, comprising three non-stranded inner bundles and nine outer bundles stranded in an SZ pattern. In particular, the inner bundles serve as a central strength member, helping to retain the lay length of the outer strands and enhancing the structural integrity of the cable. This arrangement allows for higher fiber counts up to 864 fibers and beyond without increasing the overall cable diameter.

In accordance with an embodiment of the present disclosure, the optical fiber cable (100) contributes to eliminating the traditional central strength member by using a non-stranded core, creating space for increased fiber capacity. Optimized lay lengths - greater than 20,000 mm for non-stranded optical fiber units and 500-1500 mm for stranded optical fiber units may contribute to ensure mechanical stability and prevent performance degradation. Further, ribbed thermoplastic layer (106) combined with high packing density may contribute to facilitate long distance installations. Additionally, the coating chemistry, with disclosed tensile modulus and refractive index values, minimizes micro-bending losses to maintain superior optical performance.

In exemplary implementations, the combination of parameters produces the one or more of the following results:
Cable with 3 non-stranded units (102) (lay length >20,000 mm) + 9 stranded units (104) (lay length 800 mm): Packing density = 64.2%

Comparative cable with equal lay lengths (1500 mm) for all units: Packing density = 52.7%

Bending attenuation test (150 mm radius, 3 turns): <0.03 dB increase for claimed cable vs. 0.12 dB for comparative cable

Air-blowing performance in 35 mm duct with 50% fill ratio: >1800 m at 55 m/min for claimed cable vs. 950 m at 35 m/min for conventional design
Embodiments of the present disclosure relate to an optical fiber cable comprising a plurality of non-stranded optical fiber units and one or more stranded optical fiber units wound around the non-stranded optical fiber units, surrounded by a thermoplastic layer.

According to a first aspect, the plurality of non-stranded optical fiber units has a lay length >20,000 mm and an extra unit length of 0 to 0.5% relative to cable length; the one or more stranded optical fiber units has a lay length of 500-1500 mm and an extra unit length of 0.5% to 1.5% relative to cable length; and the cable achieves a fiber packing density >60%.

According to a second aspect, the non-stranded optical fiber units comprise twisted bendable optical fiber ribbons with a lay length between 4000-10,000 mm.

According to a third aspect, the cable further comprises binder yarns applied with a lay length of 25-100 mm.

According to a fourth aspect, the optical fibers comprise specific coating properties: primary coating tensile modulus 0.4-1 MPa and refractive index 1.44-1.49; secondary coating tensile modulus 30-50 MPa.

According to a fifth aspect, the cable is configured for air-blowing installation over distances of 1500-2000 m.

According to a sixth aspect, the thermoplastic layer has ribs and grooves and/or embedded strength members.

The various aspects may be combined in different ways to achieve the technical effects described herein.

In accordance with an embodiment of the present disclosure, the optical fiber cable (100) may combine one or more of the following:
a hybrid core structure with non-stranded optical fiber units (102) in the centre and helically or SZ bounded stranded optical fiber units (104) in the outer in specific lay length ranges (>20,000 mm for non-stranded, 500-1500 mm for stranded) may contribute to achieve >60% packing density while preventing micro-bending losses;
optimized binder yarn (108) lay length (25-100 mm) that may contribute to maintain twisted bendable ribbon bundle (122) integrity without inducing stress; twisted bendable fiber ribbons (120) (4000-10,000 mm lay) may contribute to eliminate bulging while enabling flexibility;
precisely engineered coating properties (primary coating modulus 0.4-1 MPa/RI 1.44-1.49; secondary coating modulus 30-50 MPa) that may contribute to reduce bending loss to ≤0.5 dB/turn.

In accordance with an embodiment of the present disclosure, the optical fiber cable may have a combination of non-stranded optical fiber units (102) positioned centrally and helically stranded optical fiber units (104) wound around them, which departs from conventional prior art constructions that use either fully stranded or fully non-stranded designs, which may suffer from suboptimal packing density, lay instability, and excessive micro-bending losses. The structure disclosed herein eliminates a conventional central strength member, thereby increasing the fiber packing density to greater than 60% and contributing to reducing cable diameter.

Additionally, the central non-stranded optical fiber units provide stabilization to the surrounding stranded optical fiber units, preventing lay collapse and improving mechanical integrity without the need for an additional central strength member (112).

In accordance with an embodiment of the present disclosure, ranges for lay length and excess fiber length of the non-stranded optical fiber units (102), which has a length greater than 20,000 mm with an extra unit length between 0-0.5%, and the stranded optical fiber units (104) are helically wound with a lay length ranging from 500-1500 mm and an extra length between 0.5-1.5%. This asymmetric configuration may be optimized to suppress ribbon bulging and preserve high-speed manufacturability through controlled binder yarn (108) lay lengths between 25-100 mm.

Further, the optical fiber cable (100) may also use twisted bendable ribbon (120) with lay lengths in the range of 4000-10,000 mm, that may contribute to optimizing high mechanical flexibility with minimal optical penalty, achieving ≤0.05 dB attenuation changes at a 150 mm bend radius.

The optical fiber cable according to the present disclosure encompasses various embodiments and combinations of features: the combination of non-stranded optical fiber units (102) with a lay length >20,000 mm and extra unit length 0-0.5%, and stranded optical fiber units (104) with a lay length 500-1500 mm and extra unit length 0.5-1.5%; the resulting fiber packing density >60%; the use of twisted bendable optical fiber ribbons (120) with lay length 4000-10,000 mm within the units; specific primary coating (130) and secondary coating (132) properties as defined herein; and the structural configurations described in relation to the drawings. These features may be implemented individually or in various combinations to achieve the technical effects described.

In accordance with an embodiment of the present disclosure, the optical performance may be further enhanced by a dual-layer fiber coating, where the primary coating (130) exhibits a low modulus of 0.4-1 MPa and a refractive index between 1.44-1.49, paired with a secondary coating (132) of higher modulus (30-50 MPa). This combination may be designed to reduce stress transfer to the optical fiber, minimizing bending-induced losses while maintaining long-term durability. Also, the optical fiber cable (100) may exhibit superior air-blowing performance, with demonstrated distances of 1500-2000 meters at speeds exceeding 50 m/min in ducts with 35-65% fill ratio. This performance may be facilitated by the optimized stiffness contributed by the stranded/non-stranded architecture.

Advantageously, the high-density optical fiber cable has good optical performance, high packaging density, reduced micro-bending losses, reduced diameter and weight and retained lay length of stranded optical fiber units.

While various aspects of the present disclosure have been illustrated and described, it will be clear that the present disclosure is not limited to these aspects only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

## Claims

1. An optical fiber cable (100) comprising:
**characterized in that**: a plurality of non-stranded optical fiber units (102);
one or more stranded optical fiber units (104) wound around the plurality of non-stranded optical fiber units (102); and
a thermoplastic layer (106) surrounding the one or more stranded optical fiber units (104), the plurality of non-stranded optical fiber units (102) has a lay length greater than 20,000 mm and an extra unit length of 0 to 0.5% relative to the cable length, the one or more stranded optical fiber units (104) has a lay length in the range of 500 mm to 1500 mm and an extra unit length of 0.5% to 1.5% relative to the cable length; and the optical fiber cable (100) has a fiber packing density greater than 60%.

2. The optical fiber cable (100) as claimed in claim 1, wherein the plurality of non-stranded optical fiber units (102) comprise a plurality of twisted bendable optical fiber ribbons (120), and wherein the twisted bendable optical fiber ribbons (120) have a ribbon lay length in the range of 4,000 mm to 10,000 mm.

3. The optical fiber cable (100) as claimed in claim 1, further comprising a binder element (108) over at least one of: the plurality of non-stranded optical fiber units (102) and the one or more stranded optical fiber units (104), wherein the binder element (108) is a binder yarn, film, or tape.

4. The optical fiber cable (100) as claimed in claim 3, wherein the binder element (108) is a binder yarn applied with a lay length in the range of 25 mm to 100 mm.

5. The optical fiber cable (100) as claimed in claim 3, wherein two binder yarns (108) are applied contra-helically over the one or more stranded optical fiber units (104)

6. The optical fiber cable (100) as claimed claim 1, wherein the optical fiber cable (100) comprises a plurality of optical fibers (118), each optical fiber (118) comprising a glass core (124), a glass cladding (126), a primary coating (130), and a secondary coating (132),
wherein the primary coating (130) has a mean tensile modulus at room temperature in the range of 0.4 MPa to 1.0 MPa and a refractive index in the range of 1.44 to 1.49, and
wherein the secondary coating (132) has a mean tensile modulus at room temperature in the range of 30 MPa to 50 MPa.

7. The optical fiber cable (100) as claimed in claim 1, wherein the optical fiber cable (100) comprises a plurality of optical fibers (118), each optical fiber (118) comprising a glass core (124), a glass cladding (126), a primary coating (130), and a secondary coating (132), wherein the primary coating (130) has a mean tensile modulus at room temperature in the range of 0.4 MPa to 1.0 MPa and a refractive index in the range of 1.44 to 1.49.

8. The optical fiber cable (100) as claimed in claim 7, wherein the secondary coating (132) has a mean tensile modulus at room temperature in the range of 30 MPa to 50 MPa.

9. The optical fiber cable (100) as claimed in claim 7, wherein the Young's modulus of the primary coating (130) is in the range of 0.3 MPa to 0.5 MPa.

10. The optical fiber cable (100) as claimed in claim 7, wherein the Young's modulus of the secondary coating (132) is in the range of 800 MPa to 1200 MPa.

11. The optical fiber cable (100) as claimed in claim 1, wherein the thermoplastic layer (106) has an outer surface comprising a plurality of alternating ribs and grooves.

12. The optical fiber cable (100) as claimed in claim 1, wherein the thermoplastic layer (106) has a plurality of strength members (112) embedded therein or disposed therebeneath.

13. The optical fiber cable (100) as claimed in claim 1, wherein at least one of the one or more stranded optical fiber units (104) is a compact fiber unit (CFU) (114) comprising a plurality of optical fibers (118) embedded in a resin (116).

14. The optical fiber cable (100) as claimed in claim 1, wherein the one or more stranded optical fiber units (104) are wound in a helical or SZ-stranded configuration.

15. The optical fiber cable (100) as claimed in claim 1, wherein the one or more stranded optical fiber units (104) form at least two concentric layers (1041) around the plurality of non-stranded optical fiber units (102).
